# EUROPEAN PATENT APPLICATION

(11) **EP 4 745 147 A1**
(43) Date of publication of application: **20.05.2026**
(21) Application number: 24839726.7
(22) Date of filing: 08.07.2024
(51) Int. Cl.: C07F 7/21, C07F 7/08, C08G 77/60

(54) **METHOD FOR PRODUCING CYCLIC SILANE COMPOUND**

(30) Priority: 11.07.2023 JP 2023113668
(71) Applicant: Kureha Corporation, Chuo-ku Tokyo 103-8552 (JP)
(72) Inventor: YAMASHITA, Yoshiki, Tokyo 103-8552 (JP); NAITO, Ryota, Tokyo 103-8552 (JP); KOBAYASHI, Yuto, Tokyo 103-8552 (JP)
(74) Representative: Zimmermann & Partner Patentanwälte mbB
(86) International application number: PCT/JP2024/024645
(87) International publication number: WO 2025/013836

(57) **Abstract**

A method for producing a cyclic silane compound includes obtaining a cyclic silane compound by subjecting a chain polysilane compound having a repeating unit represented by Formula (1) to a decomposition reaction in a solution containing metallic sodium and a lithium salt, wherein the chain polysilane compound is not completely dissolved in 1-chloronaphthalene at a temperature of 240°C or lower: where R¹ and R² each independently represent a hydrogen atom or a hydrocarbon group.

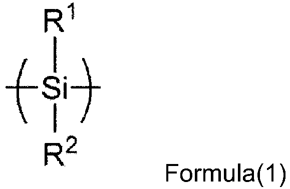

## Description

### TECHNICAL FIELD

The present invention relates to a method for producing a cyclic silane compound.

### BACKGROUND ART

A silicon carbide fiber is a fiber having excellent heat resistance and oxidation resistance even in high temperature atmosphere at a thousand and several hundreds degrees Celsius. With these properties, the silicon carbide fiber is expected to be applied in the nuclear fields and aerospace fields.

The silicon carbide fiber can be obtained by subjecting an organosilicon polymer compound such as polycarbosilane, which is a precursor of the silicon carbide fiber, to spinning, infusibilization, and pyrolysis. To obtain silicon carbide fiber having extreme heat resistance, introduction of oxygen atoms into the organosilicon polymer compound constituting the fiber needs to be inhibited, since the silicon carbide fiber containing oxygen is decomposed at a high temperature. Therefore, the silicon carbide fiber having extreme heat resistance has been produced by using an organosilicon polymer compound having a low oxygen content rate and for the infusibilization, by adopting a method that does not introduce oxygen. From a cyclic silane compound such as dodecamethylcyclohexasilane, polycarbosilane can be produced with approximately 0.1 wt% of oxygen content rate. Therefore, the cyclic silane compound is useful as a raw material for the organosilicon polymer compound, which serves as a precursor of the silicon carbide fiber.

Various methods are known as methods for producing the cyclic silane compounds. For example, Patent Document 1 discloses a method for producing a cyclic silane compound, the method including adding a silane monomer compound dropwise to a liquid mixture of THF and a sodium dispersion under ice-cooled condition, and thus, subjecting the mixture to a polymerization reaction to yield a chain polysilane compound, adding naphthalene to the chain polysilane compound, and heating the chain polysilane compound under reflux.

Patent Document 2 discloses a method for producing a cyclic silane compound, the method including adding a silane monomer compound dropwise to a liquid mixture of THF, a sodium dispersion, and lithium chloride under ice-cooled condition, and then subjecting the mixture to a polymerization reaction.

Patent Document 3 discloses a method for producing a cyclic silane compound, the method including reacting a linear polysilane having a degree of polymerization of 10 to 100, an alkali metal, and an aromatic hydrocarbon capable of forming a complex with the alkali metal, in an ether-based solvent. In the examples, naphthalene is used as the aromatic hydrocarbon.

### CITATION LIST

### PATENT DOCUMENT

Patent Document 1: JP 2019-156792 A
Patent Document 2: WO 2020/045614
Patent Document 3: JP 54-130541 A

### SUMMARY OF INVENTION

### TECHNICAL PROBLEM

However, when the cyclic silane is produced by subjecting the silane monomer compound to the polymerization reaction as in Patent Document 2, it is necessary to use a stoichiometric amount of metallic sodium. Therefore, a certain amount of sodium chloride or the like is generated as by-products. From the viewpoint of further increasing the production efficiency, it is desired to reduce the amount of the produced sodium chloride or the like as by-products.

Further, naphthalene used in Patent Documents 1 and 3 is a water-insoluble solid organic compound, and therefore cannot be removed by washing with water, and the purification tends to be complicated. Therefore, it is desired that the purification can be performed only by washing with water (the purification can be easily performed).

Further, it is also desired to increase the yield of the cyclic silane compound more than ever.

The present invention is accomplished in view of the above circumstances. An object of the invention is to provide a method for producing a cyclic silane compound, which can produce the cyclic silane compound in a high yield while reducing an amount of a by-product produced, even by simple purification.

### SOLUTION TO PROBLEM

The present invention relates to a method for producing a cyclic silane compound below.
[1] A method for producing a cyclic silane compound, the method including: obtaining a cyclic silane compound by subjecting a chain polysilane compound having a repeating unit represented by Formula (1) to a decomposition reaction in a solution containing metallic sodium and a lithium salt, wherein the chain polysilane compound is not completely dissolved in 1-chloronaphthalene at a temperature of 240°C or lower: 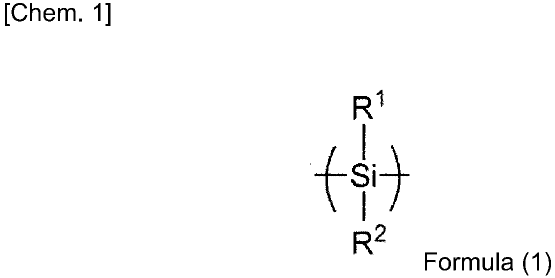 where R¹ and R² each independently represent a hydrogen atom or a hydrocarbon group.
[2] The method for producing a cyclic silane compound according to [1], wherein the chain polysilane compound is not dissolved in 1-chloronaphthalene at a temperature of 250°C or lower.
[3] The method for producing a cyclic silane compound according to [1] or [2], wherein the obtaining a cyclic silane compound is performed by heating the chain polysilane compound in the solution.
[4] The method for producing a cyclic silane compound according to [3], wherein the heating is performed at 40°C or higher.
[5] The method for producing a cyclic silane compound according to any of [1] to [4], wherein a content of the lithium salt in the solution is 2.0 mmol or more per 1 g of the chain polysilane compound.

### ADVANTAGEOUS EFFECTS OF INVENTION

According to the present invention, there can be provided a method for producing a cyclic silane compound, which can produce the cyclic silane compound in a high yield while extremely reducing an amount of a by-product produced, even by simple purification.

### BRIEF DESCRIPTION OF DRAWINGS

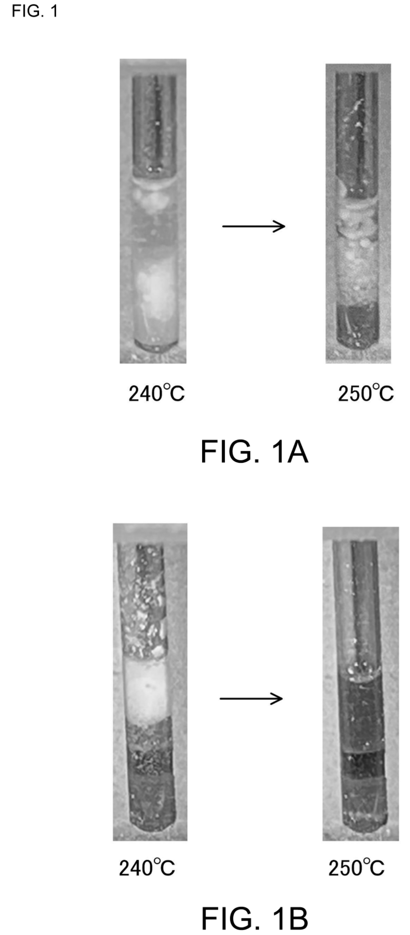

[FIG. 1] FIG. 1A is photographs showing results of a dissolution test of a silane compound A, and FIG. 1B is photographs showing results of the dissolution test of a silane compound B.

### DESCRIPTION OF EMBODIMENTS

In the present specification, numerical ranges indicated by "to" refer to ranges including the numerical values described before and after "to" as the lower and upper limits.

### 1. Method for Producing Cyclic Silane Compound

A method for producing a cyclic silane compound according to an embodiment of the present invention includes subjecting a chain polysilane compound to a decomposition reaction in a solution containing metallic sodium and a lithium salt to yield the cyclic silane compound.

Specifically, the method includes preparing a solution containing the chain polysilane compound, the metallic sodium, and the lithium salt, and subjecting the chain polysilane compound to the decomposition reaction in the solution, and thus, the cyclic silane compound can be obtained.

### 1-1. Preparation Step

The solution containing the chain polysilane compound, the metallic sodium and the lithium salt is prepared.

### Chain Polysilane Compound

The chain polysilane compound has a repeating unit represented by Formula (1).

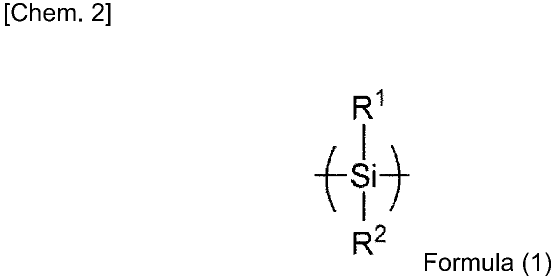

In the formula, R¹ and R² each independently represent a hydrogen atom or a hydrocarbon group.

Examples of the hydrocarbon group include an alkyl group, an alkenyl group, an alkynyl group, and an aryl group.

R¹ and R² can be a side chain in the cyclic silane compound. Therefore, R¹ and R² can be selected depending on the cyclic silane compound to be synthesized. R¹ and R² are each preferably a hydrogen atom or a hydrocarbon group, more preferably a hydrocarbon group, even more preferably an alkyl group, and yet further preferably a methyl group.

In addition, in the chain polysilane compound, each of the groups bonded to silicon atoms at both ends of the molecule may be a hydrogen atom, a hydrocarbon group, an alkoxy group, or a hydroxy group. Examples of the alkoxy group include a methoxy group, an ethoxy group, and the like. Since the alkoxy group and the hydroxy group have a large electronegativity difference from silicon atoms, they are likely to cause intramolecular polarization in the chain polysilane compound and may easily function as a leaving group. Therefore, each of the groups at both ends of the molecule of the chain polysilane compound may be an alkoxy group or a hydroxy group.

In other words, specific examples of the chain polysilane compound include a compound represented by Formula (2).

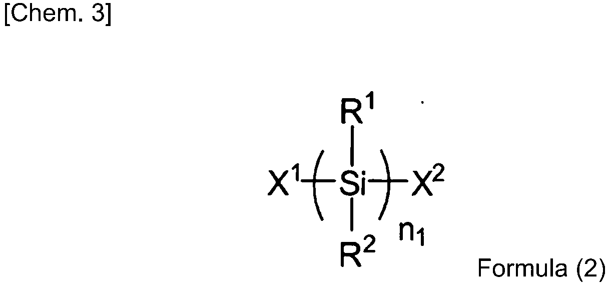

In Formula (2), R¹ and R² are the same as R¹ and R² in Formula (1). X¹ and X² are each a hydrogen atom, a hydrocarbon group, an alkoxy group, or a hydroxy group, and are, as an example, an alkoxy group or a hydroxy group.
n₁ is a degree of polymerization such that the compound represented by Formula (2) is not completely dissolved at a temperature of 240°C or lower in a dissolution test in 1-chloronaphthalene described later, and is an integer of, for example, 17 or more, preferably 20 or more, and more preferably 30 or more.

The number-average molecular weight of the chain polysilane compound is preferably high, from the viewpoint of increasing the yield of the cyclic silane compound. The number-average molecular weight of the chain polysilane compound is, for example, preferably 950 or more, more preferably 1100 or more, and even more preferably higher than 1700. When the number-average molecular weight is 1100 or more, an amount of an intermediate produced by the decomposition reaction can be increased, and therefore, the yield of the cyclic silane compound can be further increased. The upper limit of the number-average molecular weight is not particularly limited, and may be, for example, 650000 or less from the viewpoint of shortening the reaction time.

The number-average molecular weight of the chain polysilane compound can be evaluated by using, as an index, the temperature at which the chain polysilane compound is dissolved in 1-chloronaphthalene. For example, the higher the number-average molecular weight of the chain polysilane compound, the higher the temperature at which the chain polysilane compound is dissolved in 1-chloronaphthalene. Since the chain polysilane compound used in the present embodiment preferably has a high number-average molecular weight, the temperature at which the chain polysilane compound is dissolved in 1-chloronaphthalene is also preferably high. Specifically, it is preferable that the chain polysilane compound not be completely dissolved in 1-chloronaphthalene at a temperature of 240°C or lower, and not be completely dissolved in 1-chloronaphthalene even at a temperature of 250°C or lower.

The temperature at which the chain polysilane compound is dissolved in 1-chloronaphthalene can be confirmed by the following method.
In other words, a glass capillary having an internal diameter of 1.0 mm is filled with the chain polysilane compound to about 3 to 5 mm of the glass capillary and filled with 1-chloronaphthalene to 5 to 10 mm of the glass capillary (about twice as much as the amount of the chain polysilane compound), and then purged with argon gas and sealed.
This sealed glass capillary is placed in a melting point apparatus (B-545, manufactured by Buchi) in which the temperature inside the apparatus has been increased to 240°C in advance, and allowed to stand for 5 minutes. After the standing, the state of the chain polysilane compound filled in the glass capillary is visually confirmed to determine whether the chain polysilane compound is completely dissolved or not.
By repeating this procedure at different temperatures, the temperature at which the chain polysilane compound is completely dissolved can be specified.

The chain polysilane compound is a white solid. Therefore, if even a part of the chain polysilane compound remains without being dissolved, the state in which the white solid remains can be visually confirmed. Therefore, whether the chain polysilane compound is completely dissolved can be determined by visual observation which reveals whether the chain polysilane compound is transparent and no white solid remains. For example, at 250°C in FIG. 1A described later, the white solid partly remains without being dissolved; whereas at 250°C in the FIG. 1B, a state where the white solid is completely dissolved is shown. Whether the dissolution is complete can also be confirmed by the transmittance or turbidity of a dissolution liquid, or the whiteness degree of an image of the dissolution liquid obtained by image processing.

The chain polysilane compound can be identified by using a Fourier transform infrared spectrophotometer and a microscopic Raman spectrometer. It can be specified that a compound contained in a sample has the repeating unit represented by Formula (1) (that the compound is the chain polysilane compound), when the peaks are observed at 742 cm⁻¹, 831 cm⁻¹, 1246 cm⁻¹, 1400 cm⁻¹, 2892 cm⁻¹, and 2950 cm⁻¹ in the IR spectrum measured by the Fourier transform infrared spectrophotometer, and the peak is observed at 482 cm⁻¹ in the Raman spectrum measured by the microscopic Raman spectrometer. In addition, it can be confirmed by ²⁹Si CP/MAS NMR that the compound has a chain structure with an end.

The chain polysilane compound may be synthesized or be a commercially available product.

### Metallic Sodium

The metallic sodium can function as a catalyst for the decomposition reaction. The form of the metallic sodium is not particularly limited, and from the viewpoint of increasing the surface area and enhancing the reactivity, the metallic sodium processed into a sodium dispersion is preferred.

The sodium dispersion (SD) in the present specification refers to metallic sodium dispersed in an electrical insulating oil or an aromatic hydrocarbon. Examples of the electrical insulating oil include aliphatic hydrocarbons such as liquid paraffin and mineral oil, and examples of the aromatic hydrocarbon include toluene and xylene.

From the viewpoint of reactivity and safety, the average particle size of the metallic sodium is preferably 1 to 30 µm, more preferably 2 to 10 µm, and even more preferably 3 to 5 µm. The average particle size can be measured by a laser diffraction particle size distribution analyzer.

The amount of the metallic sodium contained in the solution is preferably 0.1 to 120 mmol per 1 g of the chain polysilane compound from the viewpoint of the yield of the cyclic silane compound. When the content of the metallic sodium is 0.1 mmol or more, the decomposition reaction of the chain polysilane compound is easier to proceed. When the content of the metallic sodium is 120 mmol or less, it is possible to reduce unreacted metallic sodium while allowing the reaction to proceed sufficiently. In addition, when the chain polysilane compound is dichlorodimethylpolysilane or the like, an amount of a by-product produced such as sodium alkoxide can be further reduced. From the viewpoint of sufficiently advancing the reaction and further reducing the unreacted metallic sodium, the amount of the metallic sodium is more preferably 0.5 to 80 mmol, even more preferably 0.5 to 20 mmol, and particularly preferably 1.0 to 10.0 mmol, per 1 g of the chain polysilane compound.

### Lithium Salt

The lithium salt can mainly contribute to the stabilization of the intermediate produced in the decomposition reaction. The lithium salt may be an inorganic salt or an organic salt.

Examples of the inorganic salt include halides and salts of inorganic acids. Examples of the halide include lithium chloride, lithium bromide, lithium iodide, and lithium fluoride. Examples of the salt of inorganic acids include lithium carbonate, lithium hydrogen carbonate, lithium nitrate, lithium nitrite, lithium sulfate, and lithium sulfite.

Examples of the organic salt include carboxylate, sulfonate, and salts of phenols. Examples of the carboxylate include lithium acetate, lithium formate, and lithium citrate. Examples of the sulfonate include lithium methanesulfonate, lithium benzenesulfonate, and lithium p-toluenesulfonate. Examples of the salt of phenols include lithium phenoxide, lithium salicylate, and cresol lithium salts.

Among these, an inorganic salt is preferable, and a halide is more preferable. Among the halides, lithium chloride and lithium bromide are preferable, and lithium chloride is more preferable. One of these lithium salts may be used alone, or a plurality of these lithium salts may be mixed for use.

The molar ratio of the lithium salt to the metallic sodium (lithium salt/metallic sodium) contained in the solution depends on the content of the metallic sodium, and is, for example, preferably 0.01 or more, more preferably 0.06 or more, even more preferably more than 1.0, and most preferably 1.3 or more. When the molar ratio is 0.06 or more, the intermediate produced in the decomposition reaction of the chain polysilane compound is likely to be moderately stabilized, and the yield of the cyclic silane compound is likely to be further increased. In addition, even when the content of the metallic sodium is small, the yield of the cyclic silane compound is easily maintained. On the other hand, the molar ratio of lithium is preferably 10.0 or less, more preferably 6.0 or less, even more preferably 3.0 or less, and most preferably 2.0 or less. When the molar ratio is 3.0 or less, the decomposition of the cyclic silane compound produced can be further suppressed.
When the molar ratio of the lithium salt contained in the solution is within the above range, the yield of the cyclic silane compound can be further increased.

The amount of the lithium salt contained in the solvent is not limited as long as the amount falls within the above range of the molar ratio, and is preferably 1.0 mmol or more, more preferably 1.5 mmol or more, and further preferably 2.0 mmol or more, per 1 g of the chain polysilane compound. The upper limit of the amount of the lithium salt is, for example, preferably 9.0 mmol or less, and more preferably 5.0 mmol or less.

The amount of the metallic sodium, the lithium salt and the molar ratio of the metallic sodium and the lithium salt are as described above, and from the viewpoint of further increasing the reactivity and further increasing the yield, it is preferable that these quantitative relationships be satisfied at the same time.
For example, the amount of the metallic sodium contained in the solution is preferably 0.1 to 120 mmol, more preferably 0.5 to 20 mmol; the amount of the lithium salt is preferably 1.0 to 9.0 mmol, more preferably 2,0 to 5.0 mmol; and the molar ratio (lithium salt/metallic sodium) is preferably 0.01 or more, and more preferably more than 1.0, per 1 g of the chain polysilane compound.

### Solvent

The solution preferably further contains a solvent. Any solvent may be used as long as the solvent can disperse the metallic sodium and can disperse or dissolve the lithium salt.

Examples of the solvent include aprotic polar solvents. Examples of the aprotic polar solvent include tetrahydrofuran (THF), 1,2-dimethoxyethane, 4-methyltetrahydropyran, bis(2-methoxyethyl)ether, 1,4-dioxane, and cyclopentyl methyl ether. One of these solvents may be used alone, or a mixture of two or more types of these solvents may be used. Among these, tetrahydrofuran, 4-methyltetrahydropyran, and cyclopentyl methyl ether are preferred, and tetrahydrofuran is more preferred.

### Mixing

The solution can be prepared by mixing respective components with each other. The mixing method and the procedure are not particularly limited, and for example, the metallic sodium, the lithium salt, and the chain polysilane compound are added to the solvent while the solvent being stirred, and the mixture is stirred and mixed to yield the solution.

At this time, the metallic sodium is preferably added in the form of a dispersion (SD) in which the metallic sodium is dispersed in the electrical insulating oil or the aromatic hydrocarbon as described above. The content of the metallic sodium in the added sodium dispersion is not particularly limited, and is preferably from 20 to 45 mass% from the perspective of safety.

### 1-2. Decomposition Reaction Step

In the solution prepared as described above, the chain polysilane compound is subjected to a decomposition reaction. The decomposition reaction may be performed at normal temperature or under heating.

That is, the temperature of the solution during the decomposition reaction may be 20°C to reflux temperature. The reflux temperature corresponds to the temperature of the solution when the solution is in a reflux state at normal pressure. From the viewpoint of providing the cyclic silane compound in a higher yield, the decomposition reaction is preferably performed under heating, that is, by heating the chain polysilane compound in the solution. In this case, the temperature of the solution is preferably 40°C or higher, more preferably 50°C or higher, and even more preferably 60°C or higher. However, the upper limit of the temperature of the solution is preferably 200°C or lower from the viewpoint of suppressing the decomposition of the reaction product.

The heating method is not particularly limited, and may be, for example, a method of placing the solution in an atmosphere at a predetermined temperature, or a method of heating the solution with a heater, a water bath, an oil bath, electromagnetic waves, or the like.

The reaction time indicates the time elapsed after the entire amount of the chain polysilane compound as a raw material is charged and the temperature reaches an target reaction temperature. Although the reaction time depends on the temperature of the solution, it is, for example, preferably 1 hour or more and 35 hours or less, and more preferably 3 hours or more and 10 hours or less, when the reaction is performed under heating.

### 1-3. Action

According to the above embodiment, the cyclic silane compound is produced by subjecting the chain polysilane compound to the decomposition reaction in the presence of a predetermined catalyst. Thereby, the cyclic silane compound can be obtained in a higher yield than that in known methods of subjecting silane monomers to a polymerization reaction. In addition, since a content rate of a functional group that reacts with the metallic sodium in the chain polysilane compound is extremely small, and the amount of the metallic sodium used as the catalyst can be reduced, the amount of the by-product such as sodium alkoxide produced can be significantly reduced.

Specific reaction mechanism is not clear but is presumed as follows.
In a method of producing a cyclic silane compound by subjecting silane monomers to the polymerization reaction as in the prior art, a substituent (for example, a halogen atom) contained in the silane monomer is leaved by an action of metallic sodium, and the silane monomers are polymerized each other in a chain reaction manner to produce the cyclic silane compound. Therefore, the amount of the metallic sodium required is increased, and the amount of by-products is also likely to be increased. In addition, it is difficult to further increase the yield of the cyclic silane compound.

In contrast, in the method of subjecting the chain polysilane compound to the decomposition reaction as in the present embodiment, the group (for example, an alkoxy group) at the molecular end of the chain polysilane compound is leaved by the action of the metallic sodium, or the silicon-silicon bond is cleaved by the action of the metallic sodium, and thus, the electronic state is changed to generate an active site. Thereafter, the molecular chain is cut at predetermined intervals by the active site and cyclized, and thus, the cyclic silane compound is produced. Here, the generated active site is stabilized by the lithium salt or the like, and thus is not easily deactivated, and appropriate reactivity is maintained, and thus, the reactivity is improved by adding the lithium salt or the like. As described above, the chain polysilane compound has a small number of leaving groups per molecule, and the amount of the metallic sodium required for the decomposition reaction is also small, and therefore, the amount of the by-product can be reduced. In addition, the yield of the cyclic silane compound can be increased by stabilizing the active site with the lithium salt or the like.

In addition, since it is not necessary to use a water-insoluble solid organic compound such as naphthalene, purification can be performed only by washing with water, and thus, the purification can be performed easily.

### 2. Cyclic Silane Compound

The cyclic silane compound obtained by the method for producing a cyclic silane compound according to the present embodiment has, for example, a structure represented by the following formula.

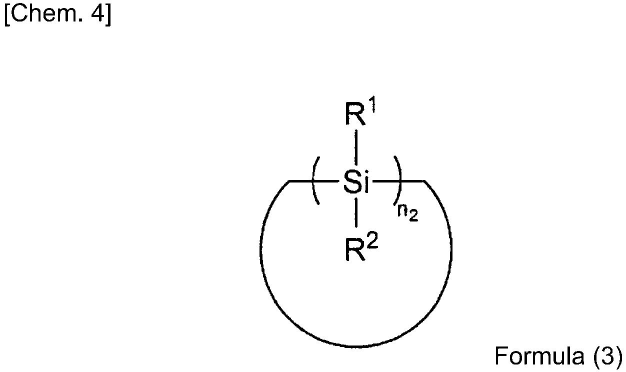

R¹ and R² in Formula (3) are the same as R¹ and R² in Formula (1), respectively.

n₂ is an integer of 3 or more. n₂ is preferably 3 to 10, more preferably 5 to 7, and even more preferably 6.

The cyclic silane has any structure depending on R¹ and R², and examples of the cyclic silane include decamethylcyclopentasilane, dodecamethylcyclohexasilane, and tetradecamethylcycloheptasilane.

The cyclic silane compound thus obtained may contain a plurality of cyclic silane compounds having different n₂s. The yield of the cyclic silane compound with n₂ of 6 (6-membered ring) is preferably 50 mass% or more, more preferably 60 mass% or more, and even more preferably 70 mass% or more. The yield of the cyclic silane compound can be determined by analyzing the reaction product with gas chromatography. The measurement conditions may be the same as those in Examples described later.

### EXAMPLES

The present invention will be described more specifically below based on Examples, but the present invention is not limited to these Examples.

### 1. Raw Material

### (1) Silane Compound

Silane compound A: chain polydimethylsilane (solid at normal temperature, number-average molecular weight is more than 1700, R¹ and R² in Formula (1) are methyl groups)
Silane compound B: chain polydimethylsilane (solid at normal temperature, number-average molecular weight is 1100 to 1700, R¹ and R² in Formula (1) are methyl groups)
Silane compound C: dichlorodimethylsilane (monosilane, liquid at normal temperature, molecular weight is 129)

The dissolution temperature of these compounds in 1-chloronaphthalene was measured.

### Measurement of Dissolution Temperature

Glass capillaries, each having an internal diameter of 1.0 mm, were filled with the respective silane compounds to about 3 to 5 mm and filled with 1-chloronaphthalene to about 5 to 10 mm (about twice as much as the amount of the silane compound), purged with argon gas, and sealed. The sealed glass capillaries were placed in a melting point apparatus (B-545, manufactured by Buchi) in which the temperature inside the apparatus had been increased to 240°C or 250°C in advance, and allowed to stand for 5 minutes. After the standing, the state of each of the silane compounds filled in the glass capillaries was visually observed. The results of the dissolution test of the silane compound A are shown in FIG. 1A, and the results of the dissolution test of the silane compound B are shown in FIG. 1B.

As a result, the silane compound A was not completely dissolved at both 240°C and 250°C (see FIG. 1A). On the other hand, the silane compound B was not completely dissolved at 240°C, but was completely dissolved at 250°C (see FIG. 1B). It is found that these results also correspond to the fact that the silane compound A has a higher number-average molecular weight than the silane compound B.

### (2) Metallic Sodium

Sodium dispersion (25 wt% sodium dispersion, average particle size is 3.40 µm)

### (3) Lithium Salt

Lithium chloride (LiCl)
Lithium bromide (LiBr)

### (4) Solvent

Tetrahydrofuran (THF)

### 2. Preparation of Cyclic Silane Compound

### Example 1

In a 200 mL four-necked flask purged with argon, 0.98 g of the silane compound A (chain polysilane), 20.4 mL of tetrahydrofuran (THF)/1 g of the silane compound, 1.6 mmol of Na in a sodium dispersion (25.72 mass% of sodium dispersion) as metallic sodium/1 g of the silane compound, and 2.23 mmol of lithium chloride as a lithium salt/1 g of the silane compound were charged, stirred and mixed, and thus, a solution was prepared.

The resulting solution was stirred and reacted for 5 hours at a reflux temperature of 68°C while being heated in an oil bath.

### Examples 2 to 10 and Comparative Examples 3 and 4

Solutions were each prepared and reacted in the same manner as that in Example 1 except that at least one of the type of the silane compound, the charged amount of tetrahydrofuran (THF), the ratio of the lithium salt to the metallic sodium, the type and the charged amount of the lithium salt, and the reaction conditions in Example 1 was changed as shown in Table 1.

### Comparative Example 1

In a 500 mL four-necked flask purged with argon, 180 mL of THF and 29.90 g of the sodium dispersion (25 wt% sodium dispersion) were charged and stirred, and thus a liquid mixture was prepared. In 150 mL of THF, 19.33 g of the silane compound C (dichlorodimethylsilane) was dissolved, and thus a silane compound solution was prepared.

After the liquid mixture was cooled down to 0 °C under ice-cooled condition, and 0.71 g of lithium chloride was charged. The silane compound solution was added dropwise over approximately 5 hours while stirring was performed under ice-cooled condition. After the dropwise addition, stirring was further performed for 3 hours, and then reaction was performed for 21 hours at room temperature.

### Comparative Examples 2 and 5

Solutions were each prepared in the same manner as that in Example 1 except that the silane compound C (dichlorodimethylsilane) was used and the charged amounts of the respective components were changed as shown in Table 1.
Then, the reaction was carried out in the same manner as that in Example 1 except that each of the resultant solutions was stirred and reacted under the respective reaction conditions shown in Table 1.

The reaction products obtained in Examples 1 to 10 and Comparative Examples 1 to 5 were subjected to reaction solution analysis using gas chromatography. The measurement conditions were as follows.

### Gas Chromatographic Measurement

Measurement instrument: GC-2025 (manufactured by Shimadzu Corporation) Column: DB1301 (Agilent Technologies), length (30 m), Diam. (0.320 m), Film (0.25 m) Carrier gas: He
Detector: FID

Then, the production of cyclic silanes (dodecamethylcyclohexasilane (6-membered ring), decamethylcyclopentasilane (5-membered ring), and tetradecamethylcycloheptasilane (7-membered ring)) was confirmed, and the yields of these cyclic silanes were determined, respectively. The results are shown in Table 2.

**[Table 1]**

| | Raw material silane compound | | | Metallic Na | Lithium salt | | | Reaction conditions | |
|---|---|---|---|---|---|---|---|---|---|
| | Type | Item | Molecular weight | Amount of substance of Na (mmol/1 g of silane) | Type | Amount of substance of LiX (mmol/1 g of silane) | LiX/Na | Reaction temperature (°C) | Reaction time (hr) |
| Example 1 | A | Chain silane | >1700 | 1.60 | Lithium chloride | 2.23 | 1.39 | 68 | 5 |
| Example 2 | B | Chain silane | 1100-1700 | 1.60 | Lithium chloride | 2.23 | 1.39 | 68 | 5 |
| Example 3 | A | Chain silane | >1700 | 1.60 | Lithium chloride | 2.23 | 1.39 | 55 | 5 |
| Example 4 | A | Chain silane | >1700 | 1.60 | Lithium chloride | 3.21 | 2.01 | 68 | 5 |
| Example 5 | A | Chain silane | >1700 | 60.30 | Lithium chloride | 4.62 | 0.08 | 68 | 5 |
| Example 6 | A | Chain silane | >1700 | 60.30 | Lithium chloride | 4.62 | 0.08 | 68 | 6 |
| Example 7 | A | Chain silane | >1700 | 60.30 | Lithium bromide | 4.62 | 0.08 | 68 | 5 |
| Comparative Example 1 | C | Monosilane | 129.06 | 16.86 | Lithium chloride | 0.87 | 0.05 | 0 °C → rt | 3 (0 °C) +21(rt) |
| Comparative Example 2 | C | Monosilane | 129.06 | 14.54 | Lithium chloride | 0.78 | 0.05 | 68 | 4 |
| Example 8 | A | Chain silane | >1700 | 60.30 | Lithium chloride | 4.62 | 0.08 | rt (20 **to** 23) | 50 |
| Comparative Example 3 | A | Chain silane | >1700 | 60.30 | - | - | - | 68 | 5 |
| Comparative Example 4 | A | Chain silane | >1700 | 1.60 | - | - | - | 68 | 5 |
| Comparative Example 5 | C | Monosilane | 129.06 | 1.60 | Lithium chloride | 2.23 | 1.39 | 68 | 5 |
| Example 9 | A | Chain silane | >1700 | 1.60 | Lithium chloride | 2.23 | 1.39 | 40 | 5 |
| Example 10 | A | Chain silane | >1700 | 1.60 | Lithium chloride | 1.60 | 1.00 | 68 | 5 |

**[Table 2]**

| | Yield (mass%) | | | |
|---|---|---|---|---|
| | 6-membered ring | 5-membered ring | 7-membered ring | Total of cyclic silanes |
| Example 1 | 86.8 | 11.4 | 1.6 | 99.8 |
| Example 2 | 79.3 | 10.6 | 1.4 | 91.3 |
| Example 3 | 80.2 | 9.3 | 1.4 | 90.9 |
| Example 4 | 77.9 | 10.3 | 1.4 | 89.6 |
| Example 5 | 77.1 | 11.3 | 1.5 | 89.9 |
| Example 6 | 80.0 | 11.3 | 1.2 | 92.5 |
| Example 7 | 72.5 | 10.6 | 1.0 | 84.1 |
| Comparative Example 1 | 36.0 | 3.3 | n.d. | 39.3 |
| Comparative Example 2 | 41.0 | 4.8 | 0.8 | 46.6 |
| Example 8 | 64.0 | 3.5 | n.d. | 67.5 |
| Comparative Example 3 | 15.0 | 7.2 | n.d. | 22.2 |
| Comparative Example 4 | n.r. | n. r. | n.r. | 0.0 |
| Comparative Example 5 | n.r. | n. r. | n.r. | 0.0 |
| Example 9 | 69.6 | 6.8 | 1.0 | 77.4 |
| Example 10 | 31.6 | 6.4 | 0.4 | 38.4 |

As shown in Table 2, it is found that in all of Comparative Examples 1, 2, and 5 in which the silane compound C (monomer) was used as a raw material, the total yields of the cyclic silanes were 46.6% or less. In addition, it is found that both of the total yields were 22% or less in Comparative Examples 3 and 4 in which the silane compound A (polymer) was used as a raw material but the lithium salt was not used.

In contrast, it is found that in Examples 1 to 9 in which as raw materials, the silane compound A or B (polymer) was used and the lithium salt was used, all of the total yields were as high as 67.5% or more. It is also found that the total yield of Example 10 is higher than those of Comparative Examples 4 and 5.

From these results, it is found that the decomposition reaction of the chain polysilane compound in the solution containing the metallic sodium and the lithium salt sufficiently proceeds, and thus, the cyclic silane was produced in a higher yield.

In particular, it is found that the total yield is further increased by setting the reaction temperature to 40°C or higher (comparison between Examples 5 and 8, and comparison between Examples 1, 3, and 9).

It is also found that the total yield is further increased by setting the charged amount of the lithium salt to 2.0 mmol or more per 1 g of the chain polysilane compound or by setting the molar ratio (lithium salt/metallic sodium) to more than 1.0 (comparison between Examples 1 and 10).

The present application claims the benefit of and priority to Japanese Patent Application No. 2023-113668 filed on July 11, 2023. The content described in the specification of the foregoing application are all incorporated in the specification of the present application by reference.

### INDUSTRIAL APPLICABILITY

According to the present invention, there can be provided a method for producing a cyclic silane compound, which can produce the cyclic silane compound having high purity and a high yield even with a small amount of metallic sodium used.

## Claims

1. A method for producing a cyclic silane compound, the method comprising:
obtaining a cyclic silane compound by subjecting a chain polysilane compound having a repeating unit represented by Formula (1) to a decomposition reaction in a solution containing metallic sodium and a lithium salt,
wherein the chain polysilane compound is not completely dissolved in 1-chloronaphthalene at a temperature of 240°C or lower: 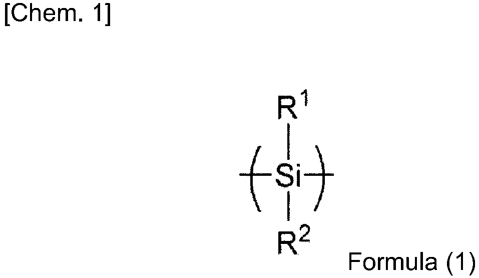
where R¹ and R² each independently represent a hydrogen atom or a hydrocarbon group.

2. The method for producing a cyclic silane compound according to claim 1,
wherein the chain polysilane compound is not dissolved in 1-chloronaphthalene at a temperature of 250°C or lower.

3. The method for producing a cyclic silane compound according to claim 1 or 2,
wherein the obtaining a cyclic silane compound is performed by heating the chain polysilane compound in the solution.

4. The method for producing a cyclic silane compound according to claim 3,
wherein the heating is performed at 40°C or higher.

5. The method for producing a cyclic silane compound according to any one of claims 1 to 4,
wherein a content of the lithium salt in the solution is 2.0 mmol or more per 1 g of the chain polysilane compound.
